# EUROPÄISCHE PATENTSCHRIFT

(11) **EP 0 532 930 B1**
(45) Veröffentlichungstag und Bekanntmachung des Hinweises auf die Patenterteilung: **20.03.1996**
(21) Anmeldenummer: 92114195.8
(22) Anmeldetag: 20.08.1992
(51) Int. Cl.: C01F 7/56

(54) **Verfahren zur Herstellung wässriger Lösungen von basischen Aluminiumsalzen**
Process for the preparation of aqueous solutions of basic aluminium salts
Procédé de préparation de solutions aqueuses de sels d'aluminium basiques

(30) Priorität: 16.09.1991 DE 4130751
(43) Veröffentlichungstag der Anmeldung: 24.03.1993
(73) Patentinhaber: Deutsche Solvay-Werke Gesellschaft mit beschränkter Haftung, 30173 Hannover (DE)
(72) Erfinder: Dillenburg, Helmut, Dr., W-4134 Rheinberg (DE); zum Hebel, Peter, Dr., W-4134 Moers (DE); Bauer, Gert, Dr., W-5657 Haan-Gruiten (DE)
(74) Vertreter: Lauer, Dieter, Dr.

(56) Entgegenhaltungen:
- DE-C- 2 309 610
- US-A- 3 957 947
- CHEMICAL ABSTRACTS, Band 115, Nr. 22, 02 Dezember 1991, Columbus, OH (US); Seite 213, Nr. 235756h
- ULLMANN's ENCYCLOPEDIA OF INDUSTRIAL CHEMISTRY, 5. Ausgabe, Band A1; Seiten 538-540

## Beschreibung

Die Erfindung betrifft ein Verfahren zur Herstellung von basischen Aluminiumsalzen, bestehend aus oder enthaltend die Zusammensetzung Al (OH)ₓ Cl₃₋ₓ, wobei x= 1 bis 2, vorzugsweise 1,2 bis 1,6 ist, in Form wäßriger Lösungen.

Aus der DE-OS 24 07 922 ist ein Verfahren zur kontinuierlichen Herstellung wäßriger Lösungen von basischen Aluminiumsalzen bekannt, wobei eine Aluminiumhydroxidaufschlämmung und Chlorwasserstoffsäure durch ein bis zum Siedepunkt der wäßrigen Lösung des basischen Aluminiumsalzes beheiztes Reaktionsrohr geleitet werden und im Anschluß an das Reaktionsrohr eine Nachbehandlungszone vorgesehen ist.

In der DE-OS 23 09 610 wird ein Verfahren zur Herstellung von basischen Aluminiumchloriden der allgemeinen Formel Al₂(OH)ₙCl_{z}, wobei O<n<4 und 6>z>2 und n + z stets 6 beträgt, beschrieben. Hierbei werden aus Aluminiumhydroxid und Chlorwasserstoffsäure hergestellte AlCl₃.6H₂O-Suspensionen mit einem Überschuß von 5 - 50 Gew.-% über der zum Erreichen des gewünschten basischen Aluminiumchlorids erforderlichen Menge des gleichen ALuminiumhydroxids bei Temperaturen von 110 - 150 °C umgesetzt.

Die vorgenannten Verfahren gehen von reinem kristallinen Aluminiumhydroxid aus und sind daher nicht anwendbar auf die Aufarbeitung von verunreinigtem Aluminiumhydroxid, das aus verschiedenen Bereichen der Aluminiumindustrie stammt, da die Verunreinigungen sich störend auf den Gang der Herstellung der basischen Aluminiumsalze auswirken.

Die Aufgabe der vorliegenden Erfindung bestand daher darin, ein Verfahren zur Herstellung wäßriger Lösungen von basischen Aluminiumsalzen zur Verfügung zu stellen, mit dessen Hilfe verunreinigtes Aluminiumhydroxid aus technischen Rückständen wirtschaftlich zu nahezu farblosen, technisch reinen Lösungen von basischen Aluminiumsalzen, enthaltend die Zusammensetzung Al (OH)ₓCl₃₋ₓ, wobei x=1 bis 2, vorzugsweise 1,2 bis 1,6 ist, aufgearbeitet werden kann.

Erfindungsgemäß wurde festgestellt, daß diese Aufgabe dadurch gelöst werden kann, daß amorphes oder teilkristallines, verunreinigtes Aluminiumhydroxid mit einem Aluminiumgehalt von weniger als
20 Gew.-%, vorzugsweise
1 - 10 Gew.-%,
und einem Wassergehalt von mehr als 50 Gew.-% und weniger als 90 Gew.-%, vorzugsweise 65 bis 80 Gew.-%, und einer durchschnittlichen Teilchengröße von
1 bis 100 µm, vorzugsweise
10 bis 25 µm,
bei einer Temperatur von
85 - 110 °C, vorzugsweise
95 - 105 °C,
unter Normaldruck mit einer stöchiometrischen oder unterstöchiometrischen Menge Salzsäure, die eine HCl-Konzentration
von mehr als 20 Gew.-%, vorzugsweise
von mehr als 25 Gew.-%,
aufweist, in einer einstufigen Reaktion während einer Zeit von
10 bis 60 min., vorzugsweise
20 bis 40 min.,
umgesetzt, die Lösung der basischen Aluminiumsalze durch Filtration von den unlöslichen Verunreinigungen getrennt und unter Verwendung von Aktivkohle und/oder Zeolithen und/oder Adsorberharzen und nachfolgend durch mindestens einen Ionenaustauscher, vorzugsweise Kationenaustauscher zum Austausch von Schwermetallionen, gereinigt wird.

Auf diese Weise werden farblose bis nahezu farblose, technisch reine Lösungen der betreffenden basischen Aluminiumsalze aus verunreinigten Aluminiumhydroxiden erhalten, die als Flockungsmittel für Wasser, vorzugsweise Trinkwasser verwendbar sind. Besonders vorteilhaft ist der Einsatz dieser Lösungen als Flockungshilfsmittel und Leimungshilfsmittel in der Papierfabrikation. Das Verfahren gemäß der Erfindung stellt somit einen wichtigen Beitrag zur Lösung der mit dem Anfall von verunreinigtem Aluminiumhydroxid in der Industrie verbundenen Umweltprobleme dar.

Nach einer vorteilhaften Ausführungsform des beanspruchten Verfahrens wird eine stöchiometrische Menge Salzsäure vorgelegt, das verunreinigte Aluminiumhydroxid zur Salzsäure zugegeben und bei Siedetemperatur mit der Salzsäure umgesetzt.

Als verunreinigtes Aluminiumhydroxid können im erfindungsgemäßen Verfahren vorteilhaft aluminiumhaltige Neben-, Abfall- oder Rückstandsprodukte aus der metallverarbeitenden Industrie, die durch chemische Behandlung in Aluminiumhydroxid überführt wurden, eingesetzt werden.

Gemäß einer weiteren Ausführungsform des erfindungsgemäßen Verfahrens werden als verunreinigtes Aluminiumhydroxid neutralisierte Aluminiumsalzlösungen aus der Oberflächenbehandlung von Aluminium eingesetzt.

### Erfindungsgemäße Beispiele

### Beispiel 1

222 g 36 %ige Salzsäurelösung wurden unter Normaldruck in einen Dreihalsrundkolben, der mit Rückflußkühler und Rührer versehen war, gegeben und auf 60 °C gebracht. Die erwärmte Lösung wurde portionsweise mit insgesamt 500 g amorphem, verunreinigtem Aluminiumhydroxid mit einem Al-Gehalt von 7,8 %, einem Wassergehalt von 74 % Gew.-% und einer Teilchengröße von 12 µm versetzt. Die erhaltene Suspension wurde unter Rückfluß 15 Minuten bei Siedetemperatur umgesetzt. Dabei löste sich das Aluminiumhydroxid nahezu vollständig auf. Nach dem Abkühlen der Lösung auf Raumtemperatur wurde über einen Faltenfilter filtriert. Der erhaltene Rückstand betrug ca. 10 g und konnte in einer nachfolgenden Reaktion wieder eingesetzt werden. Das erhaltene gelbliche Filtrat wurde zunächst über eine mit gewaschener Aktivkohle (Hydaffin 30) gefüllte Säule und anschliessend über eine Säule mit einem schwachsauren Kationenaustauscher in der aktiven H-Form (Lewatit TP 207) geschickt. Die so gereinigte Lösung des basischen Aluminiumsalzes war klar und nahezu farblos.

Die Analyse einer Probe des erhaltenen flüssigen Produktes ergab 10,1 % Al₂O₃, 11,1 % Cl und 47,3 % Basizität. Zusammensetzung des basischen Aluminiumsalzes: Al(OH)_{1,4}Cl_{1,6}.

### Beispiel 2

225 g einer 24 %igen Salzsäure wurden unter Normaldruck in einen Rundkolben auf 60 °C gebracht und anschließend portionsweise mit insgesamt 500 g amorphem, verunreinigtem Aluminiumhydroxid mit einem Al-Gehalt von 8,14%, einem Wassergehalt von 72 Gew.-% und einer Teilchengröße von 23 µm versetzt. Die Suspension wurde 45 Minuten bei Siedetemperatur unter Rückfluß erhitzt. Die nach Abkühlen der Lösung filtrierte Menge an Aluminiumhydroxid betrug 50 g. Das gelblich gefärbte Filtrat wurde mit Aktivkohle und einem schwachsauren Kationenaustauscherharz behandelt. Die so gereinigte Lösung des basischen Alumniumsalzes war klar und farblos.

Die Analyse einer Probe des erhaltenen flüssigen Produktes ergab 9,6 % Al₂O₃, 7,85 % Cl und 60,8 % Basizität. Zusammensetzung des basischen Aluminiumsalzes: Al(OH)_{1,8}Cl_{1,2}.

### Beispiel 3

Zur Herstellung der wäßrigen Aluminiumsalzlösung wurde die in Beispiel 1 beschriebene Apparatur mit 201 g einer 36 %-igen Salzsäure unter Normaldruck, anschliessend mit insgesamt 500 g amorphem, verunreinigtem Aluminiumhydroxid mit einem Al-Gehalt von 9,2 %, einem Wassergehalt von 69 Gew.-% und einer Teilchengröße von 15 µm, versehen. Die Suspension wurde 45 Minuten bei Siedetemperatur unter Rückfluß erhitzt, wobei sich das Aluminiumhydroxid bis auf einen geringen Rückstand auflöste. Die erhaltene Lösung wurde zunächst fittriert und anschließend mit Aktivkohle und einem Kationenaustauscherharz behandelt. Die so gereinigte basische Aluminiumsalzlösung war klar und farblos.

Die Analyse einer Probe des erhaltenen flüssigen Produktes ergab 12,1 % Al₂O₃, 13,3 % Cl, 2,1 % SO₄ und 41,1 % Basizität. Zusammensetzung des basischen Aluminiumsalzes: Al(OH)_{1,2}Cl_{1,6}(SO₄)_{0,1}.

## Patentansprüche

1. Verfahren zur Herstellung von basischen Aluminiumsalzen, bestehend aus oder enthaltend die Zusammensetzung Al(OH)ₓ Cl₃₋ₓ, wobei x=1 bis 2, vorzugsweise 1,2 bis 1,6 ist, in Form wäßriger Lösungen, dadurch gekennzeichnet, daß amorphes oder teilkristallines, verunreinigtes Aluminiumhydroxid mit einem Aluminiumgehalt von weniger als
20 Gew.-%, vorzugweise
1 - 10 Gew.-%,
und einem Wassergehalt von mehr als 50 Gew.-% und weniger als 90 Gew.-%, vorzugsweise 65 bis 80 Gew.-% und einer durchschnittlichen Teilchengröße von
1 bis 100 µm, vorzugsweise
10 bis 25 µm,
bei einer Temperatur von
85 - 110 °C, vorzugsweise
95 - 105 °C,
unter Normaldruck mit einer stöchiometrischen oder unterstöchiometrischen Menge Salzsäure, die eine HCl-Konzentration
von mehr als 20 Gew.-%, vorzugsweise
von mehr als 25 Gew.-%,
aufweist, in einer einstufigen Reaktion während einer Zeit von
10 bis 60 min., vorzugsweise
20 bis 40 min.,
umgesetzt, die Lösung der basischen Aluminiumsalze durch Filtration von den unlöslichen Verunreinigungen getrennt und unter Verwendung von Aktivkohle und/oder Zeolithen und/oder Adsorberharzen und nachfolgend durch mindestens einen Ionenaustauscher, vorzugsweise Kationenaustauscher zum Austausch von Schwermetallionen, gereinigt wird.

2. Verfahren nach Anspruch 1, dadurch gekennzeichnet, daß eine stöchiometrische Menge Salzsäure vorgelegt, das verunreinigte Aluminiumhydroxid zur Salzsäure zugegeben und bei Siedetemperatur mit der Salzsäure umgesetzt wird.

3. Verfahren nach Ansprüchen 1 und 2, dadurch gekennzeichnet, daß als verunreinigtes Aluminiumhydroxid aluminiumhaltige Neben-, Abfall- oder Rückstandsprodukte aus der metallverarbeitenden Industrie, die durch chemische Behandlung in Aluminiumhydroxid überführt wurden, eingesetzt werden.

4. Verfahren nach Anspruch 1, dadurch gekennzeichnet, daß als verunreinigtes Aluminiumhydroxid neutralisierte Aluminiumsalzlösungen aus der Oberflächenbehandlung von Aluminium eingesetzt werden.

## Claims

1. A method for the preparation of basic aluminium salts, consisting of or containing the composition Al(OH)ₓ Cl₃₋ₓ, wherein x = 1 to 2, preferably 1.2 to 1.6, in the form of aqueous solutions, characterised in that amorphous or partially crystalline, contaminated aluminium hydroxide having an aluminium content of less than
20% by weight, preferably
1 - 10% by weight,
and a water content of more than 50% by weight and less than 90% by weight, preferably 65 to 80% by weight, and an average particle size of
1 to 100 µm, preferably
10 to 25 µm,
is reacted at a temperature of
85 - 110°C, preferably
95 - 105°C,
at normal pressure with a stoichiometric or hypostoichiometric quantity of hydrochloric acid which has an HCl concentration
of more than 20% by weight, preferably
of more than 25% by weight,
in a single-stage reaction over a period of
10 to 60 min., preferably
20 to 40 min.,
the solution of the basic aluminium salts is separated from the insoluble impurities by filtration and is purified using activated carbon and/or zeolites and/or adsorber resins and subsequently by at least one ion exchanger, preferably cation exchanger for the exchange of heavy-metal ions.

2. A method according to Claim 1, characterised in that a stoichiometric quantity of hydrochloric acid is used, the contaminated aluminium hydroxide is added to the hydrochloric acid and is reacted with the hydrochloric acid at boiling temperature.

3. A method according to Claims 1 and 2, characterised in that aluminium-containing byproducts, waste products or residue products from the metal-processing industry, which have been converted into aluminium hydroxide by chemical treatment, are used as the contaminated aluminium hydroxide.

4. A method according to Claim 1, characterised in that neutralised aluminium salt solutions from the surface treatment of aluminium are used as the contaminated aluminium hydroxide.

## Revendications

1. Procédé pour préparer des sels basiques d'aluminium, constitués d'Al(OH)ₓCl₃₋ₓ, où x vaut de 1 à 2 et de préférence de 1,2 à 1,6, ou le contenant, sous forme de solutions aqueuses, caractérisé en ce qu'on fait réagir de l'hydroxyde d'aluminium amorphe ou partiellement cristallin, contaminé, ayant une teneur en aluminium inférieure à 20 % en poids et de préférence de 1 à 10 % en poids, et ayant une teneur en eau supérieure à 50 % en poids et inférieure à 90 % en poids, de préférence de 65 à 80 % en poids, et ayant une granulométrie moyenne de 1 à 100 µm et de préférence de 10 à 25 µm, à une température de 85 à 110°C et de préférence de 95 à 105°C, sous la pression normale, avec une quantité stoechiométrique ou inférieure à la quantité stoechiométrique d'un acide chlorhydrique dans lequel la concentration du HCl est supérieure à 20 % en poids et de préférence supérieure à 25 % en poids, dans le cadre d'une réaction en une étape, pendant un laps de temps de 10 à 60 minutes et de préférence de 20 à 40 minutes, on sépare par filtration, des impuretés insolubles, la solution des sels basiques d'aluminium, et on la purifie par utilisation de charbon actif et/ou de zéolites et/ou de résines adsorbantes, puis à l'aide d'au moins un échangeur d'ions, de préférence un échangeur de cations, assurant l'échange des ions métalliques lourds.

2. Procédé selon la revendication 1, caractérisé en ce qu'on part d'une quantité stoechiométrique d'acide chlorhydrique, que l'on ajoute à l'acide chlorhydrique l'hydroxyde d'aluminium contaminé, et qu'on le fait réagir avec l'acide chlorhydrique à la température d'ébullition.

3. Procédé selon les revendications 1 et 2, caractérisé en ce qu'on utilise comme hydroxyde d'aluminium contaminé des sous-produits, déchets ou résidus contenant de l'aluminium, provenant de l'industrie de la transformation des métaux, et qui ont été convertis en hydroxyde d'aluminium par un traitement chimique.

4. Procédé selon la revendication 1, caractérisé en ce qu'on utilise comme hydroxyde d'aluminium contaminé des solutions neutralisées de sels d'aluminium provenant du traitement de surface de l'aluminium.
